# EUROPÄISCHE PATENTSCHRIFT

(11) **EP 2 318 177 B1**
(45) Veröffentlichungstag und Bekanntmachung des Hinweises auf die Patenterteilung: **19.09.2012**
(21) Anmeldenummer: 09777074.7
(22) Anmeldetag: 09.07.2009
(51) Int. Cl.: B23Q 1/44, B23Q 1/54

(54) **WERKZEUGMASCHINE MIT EINER TRAGVORRICHTUNG FÜR WERKSTÜCKE ODER WERKZEUGE**
MACHINE TOOL HAVING A CARRIER DEVICE FOR WORK PIECES OR TOOLS
MACHINE-OUTIL AVEC DISPOSITIF PORTEUR POUR PIÈCES OU OUTILS

(30) Priorität: 25.07.2008 DE 102008034728
(43) Veröffentlichungstag der Anmeldung: 11.05.2011
(73) Patentinhaber: Deckel Maho Seebach GmbH, 99846 Seebach (DE)
(72) Erfinder: TÜLLMANN, Udo, 99817 Eisenach (DE)
(74) Vertreter: Beetz & Partner
(86) Internationale Anmeldenummer: PCT/EP2009/004988
(87) Internationale Veröffentlichungsnummer: WO 2010/009816

(56) Entgegenhaltungen:
- EP-A- 1 882 544
- FR-A- 2 816 230

## Beschreibung

Die Erfindung betrifft eine Werkzeugmaschine mit einer Tragvorrichtung für Werkstücke, Werkzeuge oder Werkzeugspindeln mit einer um eine erste Achse schwenkbaren Konsole, die an mindestens einem seitlichen Schlitten gelagert ist, mit einem auf der Konsole angeordneten Träger für Werkstücke oder eine Werkzeugspindel und mit einer Antriebsvorrichtung für die linearen Schlittenbewegungen siehe, z.B., FR-2 816 230).

Zur universellen mehrachsigen spanenden Bearbeitung von komplexen Werkstücken in einer Aufspannung sind bereits seit längerem Tragvorrichtungen und Werkstücktischanordnungen in verschiedenen Ausführungen bekannt, mit denen das auf einem Werkstücktisch aufgespannte Werkstück um 90° aus einer horizontalen Position in eine vertikale Stellung - und umgekehrt - geschwenkt werden kann. Wenn die Werkstücktischanordnungen drehangetriebene Rundtische enthalten, können durch diese motorische Verschwenkung 5-Achs-Bearbeitungen am Werkstück vorgenommen werden, d.h., die Oberseite sowie alle Seiten des Werkstückes können nacheinander in kontinuierlicher Folge vom Spanwerkzeug angefahren und bearbeitet werden.

Aus der EP 1 882 544 A ist eine zur 5-Achs-Bearbeitung von Werkstücken konzipierte Bohr- und Fräsmaschine bekannt, die eine gattungsgemäße Tragvorrichtung mit einer Werkstücktischanordnung aufweist. Der Werkstücktisch kann aus einer horizontalen Stellung motorisch in eine Vertikalposition verschwenkt werden, wobei auch Schräglagen möglich sind. Bei dieser Tragvorrichtung sind innen neben den beiden Seitenwänden des Maschinengestells-Führungsschienen auf Absätzen vorgesehen, auf denen zwei Schlitten mittels elektrischer Linearmotoren synchron verfahrbar angeordnet sind. In den beiden Schlitten ist eine brückenartige Konsole verschwenkbar gelagert, deren zur Schwenkachse versetzter Mittelteil den Träger für einen Werkstück-Drehtisch bildet. Zum Verschwenken der brückenartigen Konsole dienen direktantreibende Elektromotoren, die in den beiden Schlitten installiert sind. Die Bohr- und Fräsmaschine weist einen vertikalen Fräskopf als Bearbeitungseinheit auf, der in der horizontalen X-Koordinatenachse und in der vertikalen Z-Koordinatenachse am Maschinengestell verfahrbar geführt ist, wobei die Fahrbewegungen in der horizontalen Y-Koordinatenachse von der Werkstück-Tragvorrichtung ausgeführt werden. Durch die beidseitige Lagerung der brückenartigen Schwenkkonsole in den beiden formsteifen Schlitten kann eine ausreichend hohe Steifigkeit auch bei relativ großen Durchmessern des Werkstücktischs erreicht werden. Nachteilig ist allerdings der relativ hohe Platzbedarf der Tischanordnung und der erhebliche technische Aufwand beispielsweise durch die beiden elektrischen Direktantriebe in den Schlitten, die zum Verschwenken der brückenartigen Konsole zusammen mit dem Werkstücktisch und dem aufgespannten ggf. schwergewichtigen Werkstück erhebliche Abmessungen haben müssen.

Daneben ist aus der EP 0 712 682 A eine zur 5-Achs-Bearbeitung von Werkstücken konzipierte Bohr- und Fräsmaschine in Gantry-Bauweise bekannt, deren Maschinenständer zwei beabstandete parallele Seitenwände aufweist. Zwischen diesen Seitenwänden ist eine schwenkbare Werkstück-Tragvorrichtung vorgesehen, deren brükkenartige Schwenkkonsole einen drehangetriebenen Werkstück-Rundtisch trägt und über zwei seitliche horizontale Buchsen direkt in den Seitenwänden des Maschinenständers gelagert ist. Zur Verschwenkung der Konsole um die gemeinsame Lagerachse dienen elektrische Antriebe, die an den Seitenwänden außen angebaut sind. Die brückenartige Konsole hat einen zur gemeinsamen Dreh- und Lagerachse versetzten Mittelteil, auf dem der Werkstück-Rundtisch gelagert ist. Die beiden Seiten dieses Mittelteils sind über hebelartige Haltestreben mit den inneren Enden der in den Seitenwänden vorgesehenen Lagerbuchsen fest verbunden. Statt der schwenkbaren Werkstück-Tragvorrichtung kann bei dieser bekannten Fräs- und Bohrmaschine auch ein stationärer Werkstücktisch eingesetzt werden, der seitlich auf Absätzen befestigt wird, die an den Innenseiten der unteren Bereiche der beiden Seitenwände ausgebildet sind.

Eine weitere Werkzeugmaschine zur 5-Achs-Fräsbearbeitung von Werkstücken ist in der WO 2006/072356 A beschrieben. Der in dieser Werkzeugmaschine verwendete Werkstücktisch weist eine Dreh-Schwenk-Einheit auf, deren Dreheinheit in einer im mittleren Bereich vorgesehenen taschenartigen Auskehlung angeordnet ist. Die Dreheinheit ist an ihrer einen Stirnseite über einen seitlichen schrägen Träger mit der Schwenkeinheit fest verbunden. Durch die Anordnung der Dreheinheit in der taschenartigen Auskehlung soll die gesamte Bauhöhe der Werkstücktischanordnung vermindert werden.

Aufgabe der Erfindung ist es, eine Tragvorrichtung für Werkstücke und Werkzeuge bzw. Werkzeugspindeln zu schaffen, die einen geringen Platz beansprucht, antriebstechnisch einfach aufgebaut ist, eine erhöhte Steifigkeit hat und hohe Verstellgeschwindigkeiten erlaubt.

Diese Aufgabe wird erfindungsgemäß dadurch gelöst, dass die Konsole zusätzlich zu ihrer Lagerung an der Schlittenkonstruktion über kurbelartige Arme oder eine Gelenkstütze an einem ortsfesten Bauteil des Maschinenkörpers gelenkig gekoppelt ist.

Die erfindungsgemäße Tragvorrichtung ist technisch einfach aufgebaut, da sie keine Drehantriebe für die Verstellung des Werkstücktisches aus seiner horizontalen Lage in eine schräge oder vertikale Position - oder umgekehrt - benötigt. Die Verstell-Schwenk-Bewegungen der Konsole mit dem Werkstücktisch aus seiner Horizontalstellung in eine schräge, vertikale oder überkippte Position - und umgekehrt - werden bewirkt durch eine Linearbewegung der Schlittenkonstruktion auf seitlichen Führungsschienen, die am Maschinenkörper, vorzugsweise auf Sockeln an den Innenseiten der Seitenwände des Maschinenständers, montiert sind. Die beidseitige Drehlagerung der Konsole an der Schlittenkonstruktion und die von der Drehlagerung beabstandete Anlenkung der brückenartigen Konsole über die kurbelartig wirkenden Arme an den ortsfesten Bauteilen des Maschinenkörpers, z.B. an den Seitenwänden des Maschinenständers, ergibt eine kinematische Kopplung, in deren Verlauf die Konsole zusammen mit dem darauf gelagerten Werkstücktisch eine von der horizontalen Ausgangslage sich allmählich vergrößernde Schrägstellung einnimmt, bis die vertikale Ausrichtung oder ggf. auch eine überkippte Position erreicht ist. Da für die Schwenkbewegung der Konsole lediglich Linearantriebe und keine weiteren Drehantriebe notwendig sind, ergeben sich eine erhebliche antriebstechnische Vereinfachung der Konstruktion, verminderte Herstellungskosten und auch geringere Platzansprüche durch Wegfall der voluminösen Drehantriebe.

Gemäß einer zweckmäßigen Ausgestaltung der Erfindung sind zwei kurbelartige Arme vorgesehen, deren freie Enden in Drehlagern in den Seitenwänden des Maschinenständers gelagert sind, welche den ortsfesten Bauteil des Maschinenkörpers bilden. Diese Lagerung ermöglicht den Einsatz konstruktiv einfacher Bauteile und ergibt eine hohe Steifigkeit der Lagerung. Zweckmäßig sind diese Lager der freien Endteile der kurbelartigen Arme in den Seitenwänden des Maschinenständers oberhalb der Werkstück-Tragvorrichtung angeordnet, sodass sie von Späneablagerungen weitgehend geschützt sind.

Die kurbelartigen Arme haben zur Erhöhung ihrer Steifigkeit und zur Überbrückung von Freiräumen eine geschwungene Form und tragen an ihrem einen Ende eine innere, d.h. nach innen weisende Lagerbuchse, die Teil der Lageranordnung in der Konsole ist, sowie an ihrem anderen Ende eine äußere, d.h. nach außen weisende Lagerbuchse, die Teil der Lageranordnung in der jeweiligen Seitenwand des Ständers ist.

Zur Erzielung der gewünschten Verstellbewegungen der Tischanordnung in die horizontale Stellung sowie in die schrägen bzw. vertikalen Positionen haben die Lager der kurbelartigen Arme in der Konsole einen vorgegebenen Abstand zu den Lageranordnungen der Konsole an den Schlitten, wobei die Länge der kurbelartigen Arme auf diesen Abstand zwischen den Lagern in der Konsole abgestimmt sein sollte. Zweckmäßig liegen die Lager der kurbelartigen Arme in der Konsole und die Lageranordnungen der Konsole an den Schlitten in der Konsole in einer gemeinsamen Ebene, was eine geringe Höhe der Konsole und damit einen entsprechend geringen Platzbedarf ermöglicht.

Gemäß einer weiteren vorteilhaften Ausgestaltung der Erfindung werden als Antriebsvorrichtung für die linearen Fahrbewegungen der Schlittenkonstruktion elektrische Linearmotoren verwendet, wobei allerdings auch herkömmliche Linearantriebe wie Druckmittelzylinder, Spindeltriebe (Kugelrollspindeln) eingesetzt werden können. Bei Verwendung von elektrischen Linearmotoren sind deren plattenförmige Primär- und Sekundärteile vorzugsweise gegensinnig geneigt am Maschinenkörper angeordnet und bilden dadurch eine feste und ggf. auch selbstzentrierende Auflage für die Konsole.

Ein wesentlicher technischer Aspekt der Erfindung liegt darin, dass die Konsole verschwenkbar an einer linear verfahrbaren Schlittenkonstruktion gelagert und zusätzlich über eine z.B. kurbelartige Gelenkabstützung mit einem ortsfesten Bauteil des Maschinenkörpers gekoppelt ist. Dadurch wird erreicht, dass durch eine Linearbewegung der Schlittenkonstruktion auch die Drehlager der Konsole linear mitbewegt werden. Gleichzeitig erfolgt durch die kinematische Kopplung der Konsole am Maschinenkörper eine Verschwenkung der Konsole zusammen mit dem auf ihrer Oberseite montierten Aufnahmetisch, der so in jeweils gewünschte Betriebsstellungen - horizontal, schräg oder vertikal - verstellt wird.

Es können zwei separate seitliche Schlitten vorgesehen sein, in denen die Konsole über seitliche Lagerzapfen verschwenkbar gelagert ist, wobei jeder Schlitten auf einer eigenen Führungsschiene läuft und Mittel für eine synchrone Bewegung vorgesehen sind. Daneben können die beiden seitlichen Schlitten auch durch z.B. Querträger, Holme od. dgl. fest miteinander verbunden sein, sodass sich eine fest zusammengebaute Schlittenkonstruktion ergibt. In diesem Fall kann nur noch ein einziges Antriebsaggregat am mittleren Teil der Schlittenkonstruktion, z.B. in Form eines einzigen elektrischen Linearmotors oder eines herkömmlichen Lineartriebs, eingesetzt werden.

Die Führungsschienen für die Schlittenkonstruktion können sich horizontal in Richtung der Y-Koordinatenachse parallel zu den Seitenwänden des Maschinenständers erstrecken. In diesem Fall führt die Schlittenkonstruktion bei Aktivieren des Antriebs, z.B. der synchronisierten elektrischen Linearmotoren, eine translatorische Bewegung in der Horizontalebene aus. Bei einer zweckmäßigen Variante sind jedoch die Führungsschienen unter einem spitzen Winkel geneigt im Maschinenständer angeordnet, und zwar von der Frontseite ansteigend zur Rückseite. Dadurch wird die Schlittenkonstruktion mit der Konsole und dem Werkstücktisch bei ihrer Bewegung automatisch mit angehoben, wodurch ein schnellerer Stellungswechsel des Werkstücktisches aus seiner horizontalen in die vertikale Position - und umgekehrt - erzielt werden kann.

Bei einem weiteren Ausführungsbeispiel der Erfindung enthält die Tragvorrichtung statt eines drehbaren oder drehfesten Werkstücktisches eine Aufnahme zum Einspannen eines relativ kurzen Werkstücks oder eines Drehmeißels oder einer Frässpindel. Dadurch können vertikale und horizontale Dreh- und Fräsarbeiten durchgeführt werden. Beispielsweise kann die auf der Konsole montierte Aufnahmevorrichtung ein sog. Spannbackenfutter sein, in das z.B. Drehwerkzeuge mit ihrem Werkzeugschaft eingespannt werden. In einem solchen Fall dient die Bearbeitungseinheit, d.h. der Fräskopf der Werkzeugmaschine, zur Aufnahme eines - kurzen - Werkstücks, an dem Dreharbeiten ausgeführt werden.

Weitere Vorzüge und Besonderheiten der Erfindung lassen sich der folgenden Beschreibung von Ausführungsbeispielen unter Bezugnahme auf die Zeichnung entnehmen. Es zeigen:
- Fig. 1A, B: in schematischer Perspektivansicht eine Werkzeugmaschine mit einem Ausführungsbeispiel einer erfindungsgemäßen Tragvorrichtung in einer horizontalen Stellung (A) sowie in einer vertikalen Position (B);
- Fig. 2A, B: schematische Perspektivansichten der erfindungsgemäßen Tragvorrichtung nach Fig. 1 in Horizontalstellung (A) sowie in vertikaler Position (B),
- Fig. 3: die erfindungsgemäße Tragvorrichtung nach Fig. 1 in Explosionsdarstellung,
- Fig. 4: schematisch das Funktionsprinzip des Ausführungsbeispiels nach Fig. 1 der erfindungsgemäßen Tragvorrichtung in mehreren Stadien,
- Fig. 5: die Werkzeugmaschine nach Fig. 1 mit einem anderen Ausführungsbeispiel der erfindungsgemäßen Tragvorrichtung,
- Fig. 6: schematisch das Funktionsprinzip des Ausführungsbeispiels nach Fig. 5 in mehreren Stadien,
- Fig. 7: ein weiteres Ausführungsbeispiel einer erfindungsgemä-βen Tragvorrichtung mit einer Spindelaufnahme bzw. einem Spannfutter.

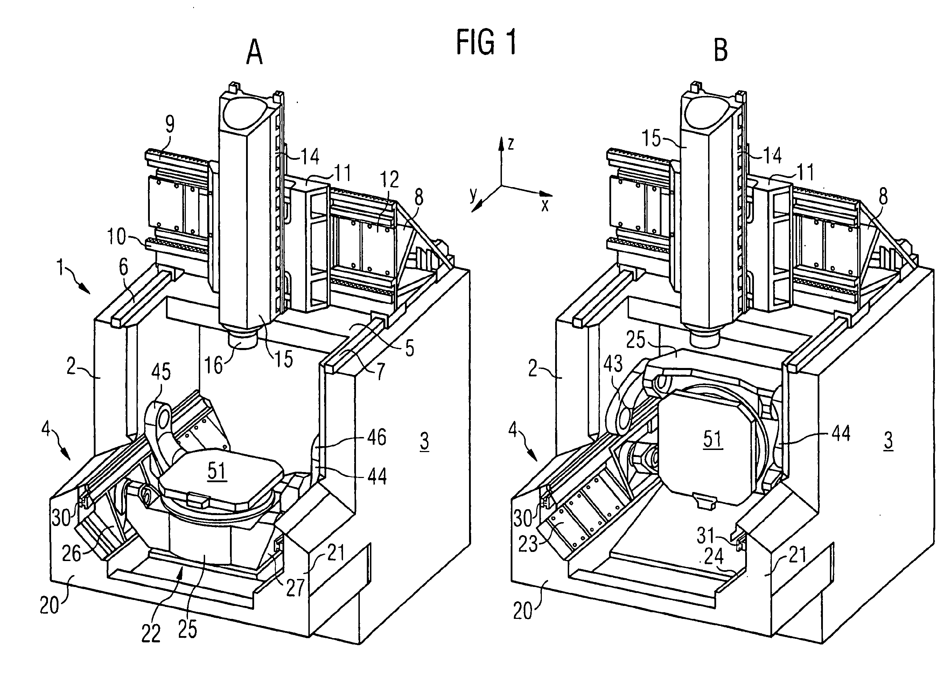

Die in Fig. 1 perspektivisch dargestellte Fräsmaschine ist in Gantry-Bauweise ausgeführt und enthält einen hochsteifen Maschinenständer 1, der von zwei zueinander parallelen Seitenwänden 2, 3, einem vorderseitigen Vorbau 4 sowie einer oberen Deckplatte 5 gebildet wird. Auf der Oberseite der beiden Seitenwände 2, 3 sind Führungsschienen 6, 7 in zueinander paralleler Ausrichtung montiert, auf denen ein Querschlitten 8 in Richtung der Y-Koordinatenachse motorisch verfahrbar geführt ist. An der vertikalen Vorderseite dieses Querschlittens 8 sind in vertikalem Abstand zwei Führungsschienen 9, 10 montiert, in denen ein Horizontalschlitten 11 in X-Koordinatenrichtung verfahrbar geführt ist. Als Antrieb für den Horizontalschlitten 11 dient ein elektrischer Linearmotor 12, der zwischen den beiden Führungsschienen 9, 10 angeordnet ist. An der Vorderseite des Horizontalschlittens 11 ist ein Vertikalschlitten 14 in der Z-Koordinatenachse verfahrbar montiert, wobei auch hier als Antriebsaggregat zweckmäßig ein elektrischer Linearmotor Verwendung findet. Dieser Vertikalschlitten 14 trägt eine Bearbeitungseinheit 15 in Form eines eingebauten Fräskopfes mit einer Arbeitsspindel 16.

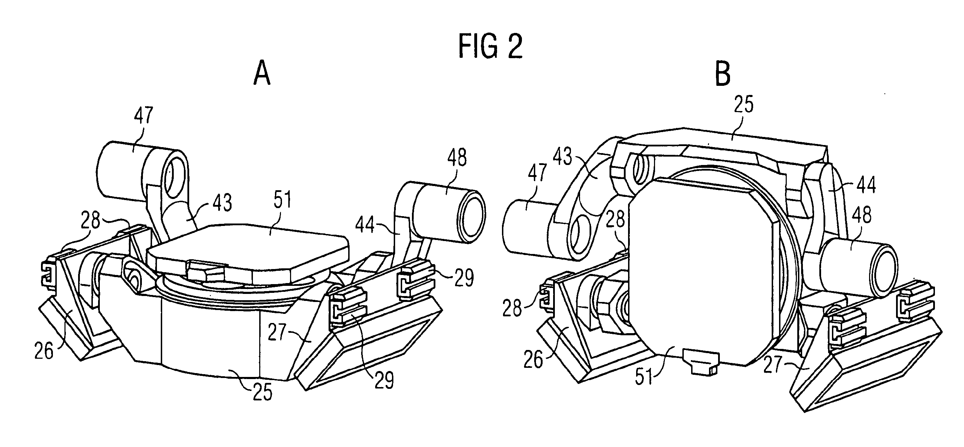

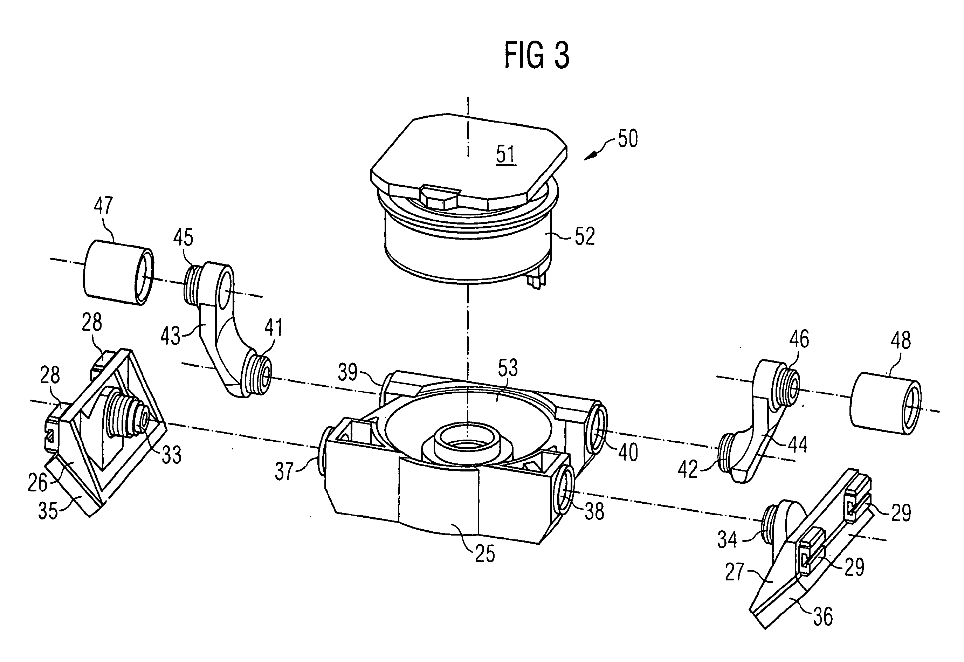

Der sich an der Frontseite der beiden Seitenwände 2, 3 erstreckende Vorbau 4 enthält zwei Seitenwände 20, 21 von gegenüber den Maschinen-Seitenwänden 2, 3 geringerer Höhe, die mit den Seitenwänden 2, 3 des Maschinenständers zu einer insgesamt hochsteifen Baueinheit verbunden sind. In dem Zwischenraum zwischen diesen beiden Seitenwänden 20, 21 des Vorbaus 4 ist die Tragvorrichtung 22 gemäß der Erfindung vorgesehen, die nachfolgend unter Bezugnahme auf die Figuren 2 und 3 im Einzelnen beschrieben wird.

Diese Tragvorrichtung 22 weist eine brückenartige Konsole 25 auf, die über Lageranordnungen in zwei seitlichen Schlitten 26, 27 verschwenkbar gelagert ist. An den Außenseiten dieser Schlitten 26, 27 sind Führungsschuhe 28, 29 befestigt, die mit je einer Führungsschiene 30, 31 zusammenwirken, welche an den Innenseiten der beiden Seitenwände 20, 21 des Vorbaus 4 und der Seitenwände 2, 3 des Ständers 1 montiert sind. Auf diese Weise werden die beiden Schlitten 26, 27 in einer etwa horizontalen Ebene geführt. In jedem Schlitten 26, 27 ist an der Innenseite ein Lager 33, 34 vorgesehen, in denen die Konsole 25 drehbar gelagert ist. An äußeren Schrägflächen der Schlitten 26, 27 sind Sekundärelemente 35, 36 von elektrischen Linearmotoren befestigt, die mit schräg angeordneten ortsfesten Primärelementen 23, 24 an den Seitenwänden 20, 21 des Vorbaus 4 zusammenwirken. Die Lagerbuchsen der Lager 33, 34 an den Innenseiten der beiden Schlitten 26, 27 greifen in zwei seitliche Lageröffnungen 37, 38 ein, die in Flucht in der Konsole 25 ausgebildet sind. Die beiden Schlitten 26, 27 können durch Querträger, Holme, Bodenplatten oder andere geeignete Bauteile fest miteinander zu einer formsteifen Schlittenkonstruktion verbunden sein. Zum translatorischen Verfahren der zu einer festen Baugruppe zusammengebauten Schlittenkonstruktion ist die Verwendung eines einzigen Antriebsaggregats, z.B. eines mittig anzuordnenden elektrischen Linearmotors ausreichend, was den technischen Aufwand und die Kosten verringert.

Wie aus Fig. 3 ersichtlich, sind an dem in der Zeichnung hinteren Endteil der Konsole 25 zwei weitere Lageröffnungen 39, 40 vorgesehen, in denen nach innen weisende Lagerbuchsen 41, 42 aufgenommen sind, die an den unteren Enden von bogenförmig ausgebildeten kurbelartigen Armen 43, 44 vorgesehen sind. Die oberen Enden dieser beiden kurbelartigen Arme 43, 44 tragen weitere nach außen weisende Lagerelemente 45, 46, die mit je einer in den Seitenwänden 2, 3 des Maschinenständers 1 sitzenden Lagerbuchse 47, 48 zusammenwirken. Statt der beiden dargestellten kurbelartigen Arme 43, 44 kann auch nur eine einzige Gelenkstütze eingesetzt werden, die zwischen der Rückseite der Konsole und einer Querversteifung des Maschinenständers angeordnet wird.

Bei den Ausführungsbeispielen nach Fig. 1 bis 6 bildet die Konsole 25 den Träger für einen Werkstück-Rundtisch 50, der eine drehangetriebene Tischplatte 51 zum Aufspannen von Werkstücken sowie einen inneren elektrischen Direktantriebsmotor aufweist, der vorteilhaft ein Torque-Motor sein kann. Dieser Antriebsmotor sowie entsprechende Führungs- und Feststellelemente sind in üblicher Weise in einen Ringkörper 52 des Werkstücktisches eingebaut bzw. in einer entsprechenden Ausnehmung 53 der Konsole 25 angeordnet.

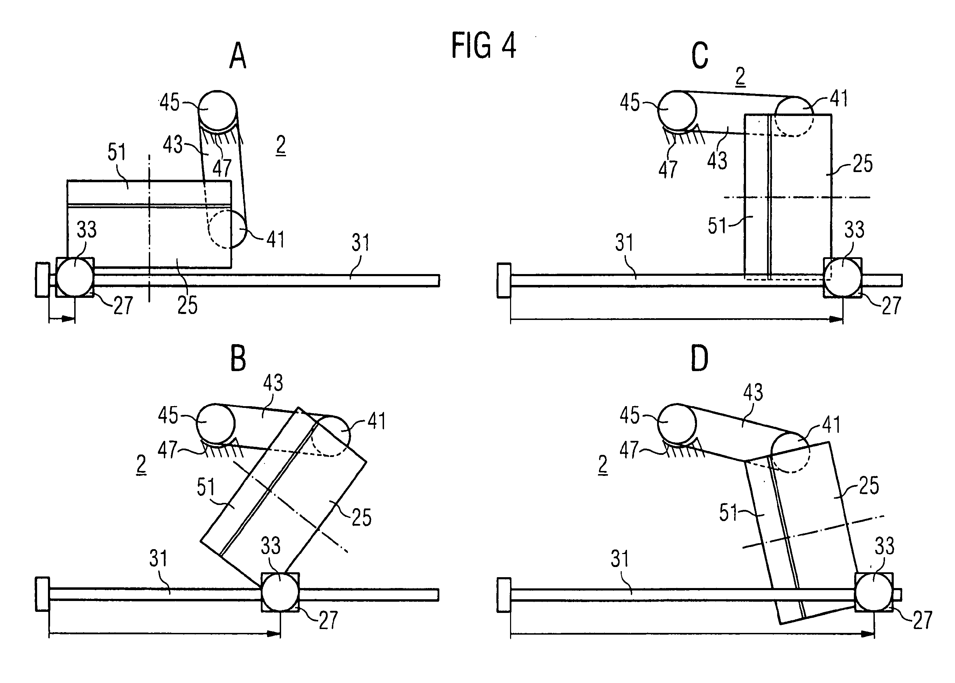

Das Funktionsprinzip und die Betriebsweise des vorstehend erläuterten Ausführungsbeispiels einer Tragvorrichtung in einer Werkzeugmaschine nach Fig. 1 wird nachfolgend unter Bezugnahme auf die Figuren 1 und 2 sowie insbesondere auf Fig. 4 beschrieben.

Wenn der Werkstücktisch 51 aus der in Fig. 1A und Fig. 2A dargestellten horizontalen Stellung in die vertikale Position nach Fig. 1B bzw. Fig. 2B bewegt werden soll, werden die beiden Linearmotoren 35, 36 aktiviert, welche die beiden Schlitten 26, 27 synchron aus der in Fig. 1A bzw. 2A dargestellten vorderen Lage in die hintere Position gemäß Fig. 1B bzw. 2B verschieben. Da die beiden Schlitten 26, 27 über die Lager 33, 37 und 34, 38 mit der Konsole 25 gelenkig verbunden sind, wird auch die Konsole 25 von den beiden Schlitten 26, 27 mitgenommen, wobei die Drehachse dieser Lager in der gleichen Ebene verschoben wird aufgrund der Führung der beiden Schlitten 26, 27 über ihre Führungsschuhe 28, 29 in den seitlichen Führungsschienen 30, 31. Da die Konsole 25 über die beiden kurbelartigen Arme 42, 43 mit den beiden Seitenwänden 2, 3 des Maschinenständers 1 kinematisch gekoppelt ist, führt die Verschiebebewegung der Konsole 25 im Bereich der beiden vorderen Lager 37, 38 zu einer fortschreitenden Schrägstellung der Konsole 25 unter gleichzeitiger Verschwenkung der beiden kurbelartigen Arme 43, 44 in ihren beiden endseitigen Lagerungen. Dieser Vorgang vollzieht sich kontinuierlich, bis eine gewünschte Endstellung des Werkstücktisches 51, vorzugsweise dessen Vertikalstellung gemäß Fig. 1B und Fig. 2B, erreicht ist.

In den Figuren 4A bis 4D ist das Funktionsprinzip der erfindungsgemäßen Tragvorrichtung schematisch dargestellt. Die mit den Einzelteilen der Werkzeugmaschine nach Fig. 1 und 2 funktionsgleichen Bauteile sind mit den gleichen Bezugszeichen gekennzeichnet.

Fig. 4A zeigt einen Betriebszustand der Tragvorrichtung, in welchem die Konsole 25 und der Werkstücktisch 51 horizontal ausgerichtet sind, wie dies auch in den Figuren 1A und 2A dargestellt ist. Durch Aktivieren der in Fig. 4 nicht dargestellten elektrischen Linearmotoren 23, 24; 35, 36 werden die Schlitten 27 auf den ortsfest am Maschinenkörper installierten Führungsschienen 31 in die in Fig. 4B gezeigte Position verfahren. Da die am rückwärtigen Endteil der Konsole 25 über die Lager 41 angelenkten Arme 43 mit ihrem freien Ende im ortsfesten Lager 45, 47 in der Seitenwand 2 des Maschinenkörpers drehbar gelagert sind, führen diese beiden seitlichen Arme 43, 44 eine Schwenkbewegung als Folge der Fahrbewegung der Schlitten 27 und damit des vorderen Endteils der Konsole 25 aus. Die Fahrbewegung der Konsole 25 in Verbindung mit der Schwenkbewegung der Arme 43 führt zu einer Schrägstellung der Konsole 25 und damit auch des auf dieser montierten Werkstücktisches 51. Der Neigungswinkel der Konsole 25 hängt allein von der Größe der Verschiebung bzw. der Fahrbewegung des Schlittens 27 ab, sodass jeder beliebige Neigungswinkel der Konsole 25 zwischen der Horizontalstellung gemäß Fig. 4A und einer in Fig. 4D dargestellten "überkippten Stellung" gewählt werden kann. Durch - nicht dargestellte - Fixierungen können die Konsole 25 und/oder die Schlitten in gewünschten Zwischenstellungen arretiert werden. Durch eine weitergehende kleinere Verschiebung der Schlitten 27 durch die elektrischen Linearmotoren gelangen die Konsole 25 und der Werkstücktisch 51 in die in Fig. 4C dargestellte vertikale Position und bei Fortsetzung dieser Horizontalbewegung der Schlitten 27 auf den Schienen 31 in die in Fig. 4D gezeigte "überkippte" Stellung, in welcher im Werkstück besondere Kavitäten und Hinterschneidungen mit einfachen Spanwerkzeugen ausgearbeitet werden können. Grundsätzlich gleiche Funktionsabläufe ergeben sich auch bei den Varianten, bei denen die beiden Schlitten zu einer gemeinsamen Tischkonstruktion zusammengebaut sind und nur ein einziger Linearantrieb verwendet wird.

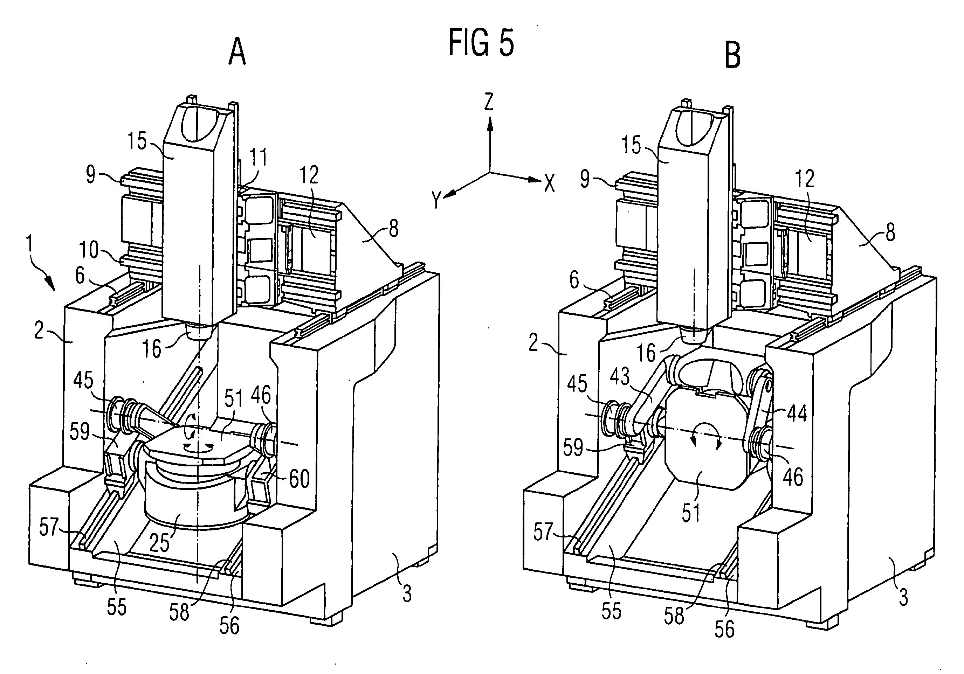

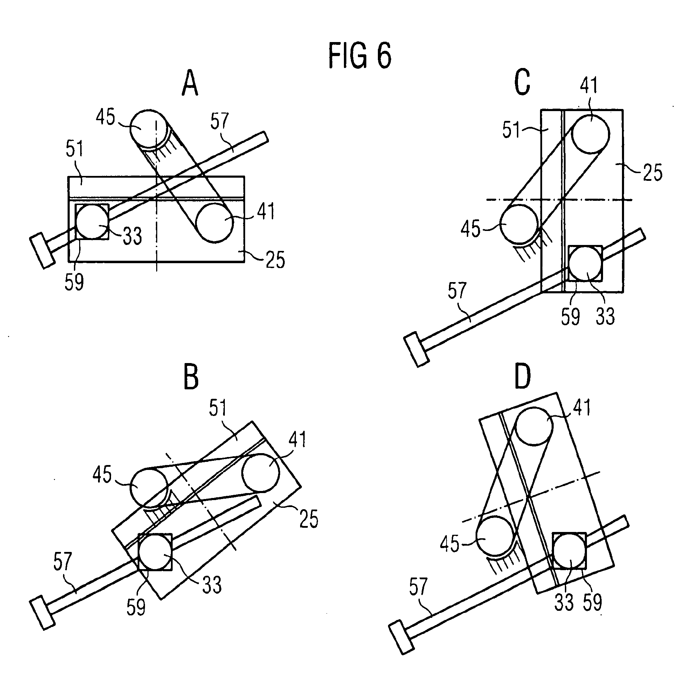

Die in den Fig. 5 und 6 dargestellte Werkzeugmaschine entspricht in ihrem technischen Konzept und ihrer Konstruktion der Fräsmaschine nach Fig. 1. Demzufolge sind auch gleiche Bauteile mit gleichen Bezugszeichen gekennzeichnet und die Fräsmaschine nach Fig. 5, 6 wird zur Vermeidung von Wiederholungen hier nicht nochmals beschrieben. Entsprechendes gilt auch für die Tragvorrichtung, deren Funktionsteile im Wesentlichen mit den in Fig. 3 dargestellten Bauteilen übereinstimmen.

Ein wesentlicher Unterschied zwischen den Tragvorrichtungen nach Fig. 1 und Fig. 5 besteht darin, dass bei der Ausführung nach Fig. 1 die Führungsschienen 30, 31 horizontal in Richtung der Y-Koordinatenachse verlaufen, sodass die beiden Schlitten 26, 27 in einer horizontalen Ebene verfahren. Demgegenüber verlaufen die beiden Führungsschienen 57, 58 bei der Ausführung nach Fig. 5, 6 unter einem spitzen Neigungswinkel von z.B. 10° bis 45° von vorne-unten nach hinten-oben, wie dies in den Fig. 5A, 5B gezeigt ist. Die beiden Führungsschienen 57, 58 sind auf zwei seitlichen Sockeln 55, 56 neben den Seitenwänden des Maschinenständers montiert. Auf jeder Führungsschiene 57, 58 ist ein Schlitten 59, 60 bzw. ein Seitenteil einer Schlittenkonstruktion verfahrbar, wobei als Schlitten-Antriebe elektrische Linearmotoren wie bei dem Ausführungsbeispiel nach Fig. 1 oder auch andere geeignete Antriebsaggregate, wie z.B. Druckmittelzylinder, Kugelrolltriebe od. dgl., eingesetzt werden können. Die Ausbildung und Lagerung der Konsole 25 und des Dreh- bzw. Rundtisches 51 der Tragvorrichtung nach Fig. 5A, B entspricht derjenigen des in Fig. 1-3 gezeigten Ausführungsbeispiels. Bei beiden Ausführungen ist die Konsole 25 und mit dieser auch der Werkstücktisch 51 stufenlos von der Horizontalstellung nach Fig. 1A und 5A in die Vertikalstellung nach Fig. 1B und 5B verschwenkbar, und zwar allein durch eine translatorische Fahrbewegung der beiden Schlitten 26, 27 bzw. 59, 60 entweder in der Horizontalen (Fig. 1A, 1B) oder in einer Schrägebene (Fig. 5A, 5B).

In Fig. 6A bis 6D sind vier Stadien des Funktionsablaufs des Ausführungsbeispiels nach Fig. 5 - etwa entsprechend Fig. 4A bis 4C -schematisch dargestellt. Im Betriebszustand 6A der Tragvorrichtung befinden sich der Schlitten 59 und das Lager 33 in der Konsole 25 am vorderen-unteren Endbereich der Tragschiene 57 und der Werkstücktisch 51 nimmt eine horizontale Position ein. Im Betriebszustand 6B sind die Schlitten 59, 60 und die Lager 33, 34 der Konsole 25 bis etwa zur Mitte der Führungsschienen 57, 58 verfahren, und die Konsole 25 mit dem Werkstücktisch 51 befindet sich in einer Schräglage mit einem Neigungswinkel von etwa 40°. Im Betriebszustand 6C sind die Schlitten 33, 34 und die Konsolenlager 59, 60 bis in den hinteren-oberen Endbereich der Führungsschienen 57, 58 verfahren worden, wodurch die Konsole 25 und damit auch der Werkstücktisch 51 eine vertikale Position einnehmen, die auch in Fig. 5B gezeigt ist. Wenn die Schlitten 59, 60 um einen kleinen Betrag weiterbewegt werden, gelangen die Konsole 25 und der Werkstücktisch 51 in eine in Fig. 6D gezeigte überkippte Stellung, in welcher z.B. Hinterschneidungen in einem Werkstück ausgespart werden können.

Bei der vorstehend anhand der Fig. 5 und 6 beschriebenen Tragvorrichtung ergibt sich eine Vergrößerung des Koppel-Startwinkels und es erfolgt eine Schlittenbewegung auf geneigten Führungen. Dadurch werden verkürzte Linearwege zur Realisierung der Schwenkbewegung der Konsole 25 und des Werkstücktisches 51 erreicht, was erhöhte Spanleistungen der Maschine bedeutet. Ferner lassen sich ein annähernd linearer Bewegungsablauf und ein vergrößerter Schwenkbereich des Werkstücktisches von etwa -10° bis +120° erzielen.

Die vorstehend im Einzelnen beschriebenen Tragvorrichtungen bieten gegenüber bekannten Ausführungen eine Reihe von Vorteilen. So ergibt sich durch die Überlagerung einer Linear- und Schwenkbewegung des Werkstücktisches eine besonders günstige Ausnutzung des Maschinenraumes und nur eine geringe Einschränkung des Arbeitsraums in der senkrechten Position des Werkstücktisches. Ferner werden hohe Genauigkeiten durch kurze thermisch aktive Längen zwischen einem Messsystem und dem Werkzeug- bzw. dem Werkstückträger erreicht. Da das Gewicht der einzelnen Baugruppen nur einen geringen Einfluss auf die Maschinengeometrie hat, lassen sich hohe geometrische Genauigkeiten sowie eine hohe Dynamik aufgrund der relativ geringen bewegten Massen erreichen. Die symmetrische Aufnahme der Tragvorrichtung an insgesamt vier voneinander beabstandeten Gelenkpunkten mit kurzen Hebelarmen ermöglicht eine hohe Gesamtsteifigkeit der erfindungsgemäßen Tragvorrichtung. Die besondere kinematische Kopplung der brückenartigen Konsole über die Drehlager mit den linear horizontal oder schräg bewegbaren Schlitten einerseits sowie über die kurbelartigen Arme mit den ortsfesten Maschinenwänden andererseits ermöglicht die problemlose Realisierung auch negativer Ausrichtungswinkel des Werkstücktisches durch Bemessung der Fahrbewegung der Schlitten. Von Vorteil ist weiterhin die relativ einfache Integration unterschiedlicher technischer Systeme zur Realisierung einer Rundachsenfunktion beispielsweise eines Werkstück-Drehtisches mit Antrieb durch einen Torque-Motor oder einer Drehspindel. Die Einschränkung des Arbeitsraums beim Umschlag des Werkzeug- oder Werkstückträgers in der Drehachse kann durch geeignete Wahl der Geometrie der Koppelelemente, z.B. der Länge und Form der beidendig drehbar gelagerten Arme, sowie der Lage und der Abstände der Gelenkpunkte optimiert werden.

Die Aufhängung des Werkstück- bzw. Werkzeugträgers bzw. der kastenartigen Konsole 25 im Bereich der vier "Eckpunkte" führt zu kleinen Biegungen und Torsionen und damit zu einer hohen Steifigkeit auch unter hohen dynamischen Belastungen. Da die Konsole und ihre zugehörigen Bauteile leichtgewichtig ausgeführt werden können, ergeben sich relativ kleine bewegte Massen und damit eine hohe Dynamik. Es besteht die Möglichkeit der Verwendung eines Palettenwechslers mit direktem Umschlag der Paletten, da die GelenkArme am hinteren Endteil der Konsole angeordnet bzw. angelenkt werden können.

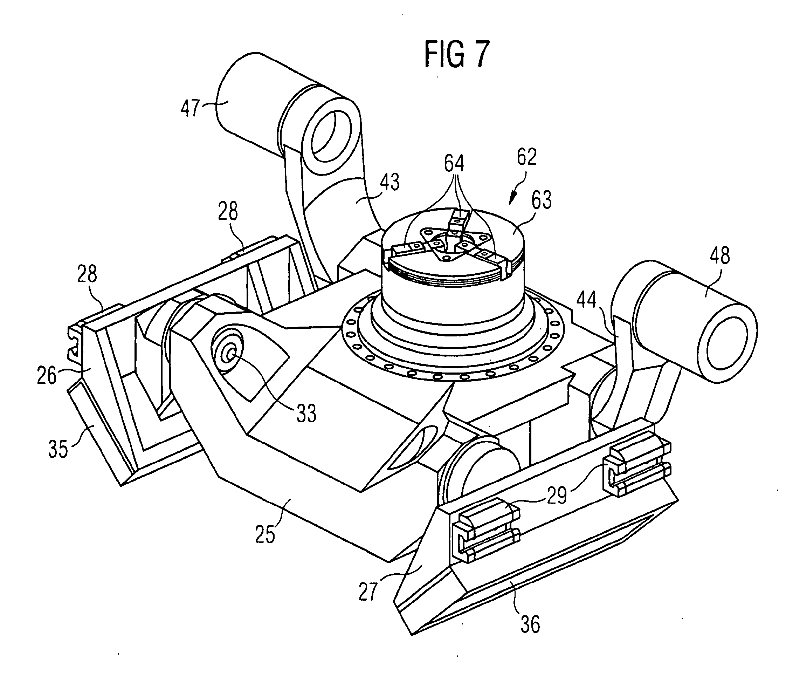

Statt des in Fig. 1 und 2 dargestellten Rundtisches können auch besondere Werkzeugspindeln in der erfindungsgemäßen Tragvorrichtung eingesetzt werden, beispielsweise Drehspindeln oder auch Spannvorrichtungen für die Drehbearbeitung, wie sie beispielsweise in Fig. 7 gezeigt sind.

Die in Fig. 7 dargestellte Tragvorrichtung entspricht weitgehend dem Ausführungsbeispiel nach Fig. 2 und kann in einer der in den Fig. 1 bzw. 6 dargestellten Werkzeugmaschinen eingesetzt werden. Bei dieser Tragvorrichtung nach Fig. 7 sind die mit der Ausführung nach Fig. 1, 2 gleichen Bauteile mit den gleichen Bezugszeichen gekennzeichnet. Statt des Drehtisches 51 der Ausführung nach Fig. 1, 2 weist die in Fig. 7 dargestellte Tragvorrichtung eine auf der Oberseite der brückenartigen Konsole 25 angeordnete Aufnahmeeinrichtung 62 zur festen Halterung eines Werkzeugs oder eines Werkstücks auf. Die dargestellte Aufnahmeeinrichtung 62 ist hier als Spannbackenfutter ausgebildet, das einen auf der Oberseite der Konsole 25 gelagerten Zylinderkörper 63 aufweist, in dem drei Spannbacken 64 um 120° winkelversetzt und radial verschiebbar angeordnet sind. In dieses Spannbackenfutter 62 kann ein - nicht dargestelltes - Werkstück fest eingespannt werden. Zum Durchführen von Drehbearbeitungen an dem eingespannten Werkstück kann der Zylinderkörper 63 des Spannbackenfutters 62 drehangetrieben werden, und zwar zweckmäßigerweise durch einen in der Konsole 25 eingebauten oder in der Aufnahmevorrichtung 62 integrierten Antriebsmotor. Daneben besteht auch die Möglichkeit, ein Werkzeug, z.B. einen Drehmeißel, in das Spannbackenfutter 62 einzuspannen und ein zu bearbeitendes kurzes Werkstück in der Werkzeugmaschine nach Fig. 1 bzw. 5 in deren Fräskopf 15, 16 einzusetzen, sodass an diesem Werkstück Dreharbeiten durchgeführt werden können.

Von besonderem praktischen Vorteil ist die Möglichkeit, dass größere Werkstücke in kleineren Maschinen bearbeitet werden können, was geringere Investitionskosten und kürzere Stückzeiten bedeuten kann. Dabei erlaubt die Koppelkinematik eine sehr hohe Bewegungsdynamik durch die kleinen bewegten Massen. Die bisher für artgleiche Tischkonstruktionen erforderlichen leistungsstarken Schwenkantriebe können bei der erfindungsgemäß ausgebildeten Tragvorrichtung entfallen.

## Patentansprüche

1. Werkzeugmaschine mit einer Tragvorrichtung für Werkstücke und Werkzeuge mit
- einer um eine erste Achse (X) schwenkbaren Konsole (25), die an im Maschinenständer (1) geführten Schlitten (26, 27) gelagert ist,
- einem auf der Konsole (25) angeordneten Träger (51, 62) für ein Werkstück oder ein Werkzeug und
- einer Antriebsvorrichtung (37, 38) zum Verschieben der Schlitten in einer zweiten Achse (Y),
**dadurch gekennzeichnet, dass**
- die Konsole (25) zusätzlich zu ihrer Lagerung in den Schlitten (26, 27) über kurbelartige Arme (43, 44) an einem ortsfesten Maschinenteil (2) angelenkt ist, sodass der auf der Konsole (25) angeordnete Träger (51; 62) durch eine Linearbewegung der Schlitten (26, 27) und aufgrund der kinematischen Kopplung der Konsole (25) am Maschinenteil (2, 3) in verschiedene Betriebsstellungen verschwenkbar ist.

2. Werkzeugmaschine nach Anspruch 1,
**dadurch gekennzeichnet, dass**
die als Schwenkbrücke ausgebildete Konsole (25) mit ihrem vorderen Endteil über zwei seitliche Drehlagerungen (33, 34; 37, 38) in zwei seitlichen Schlitten (26, 27) gelagert ist.

3. Werkzeugmaschine nach Anspruch 2,
**dadurch gekennzeichnet, dass**
die beiden Schlitten (26, 27) durch Querträger fest miteinander verbunden sind und Teile einer formstabilen Schlittenkonstruktion bilden.

4. Werkzeugmaschine nach einem der Ansprüche 1 bis 3,
**dadurch gekennzeichnet, dass**
die freien Enden der kurbelartigen Arme (43, 44) in Drehlagern (45-48) in den Seitenwänden (2, 3) des Maschinenständers (1) gelagert sind.

5. Werkzeugmaschine nach Anspruch 4,
**dadurch gekennzeichnet, dass**
die kurbelartigen Arme (43, 44) eine geschwungene Form haben und an ihrem einen Ende eine nach innen weisende Lagerbuchse (41, 42) sowie an ihrem anderen Ende eine nach außen weisende Lagerbuchse (45, 46) aufweisen.

6. Werkzeugmaschine nach einem der Ansprüche 4 oder 5,
**dadurch gekennzeichnet, dass**
die Lager (39-42) der kurbelartigen Arme (43, 44) in der Konsole (25) einen vorgegebenen Abstand zu den Drehlagern (33, 34; 37, 38) der Konsole (25) in den Schlitten (26, 27) haben.

7. Werkzeugmaschine nach Anspruch 6,
**dadurch gekennzeichnet, dass**
die Lager (39-42) der kurbelartigen Arme (43, 44) in der Konsole (25) und die Drehlager (33, 34; 37, 38) der Konsole (25) an den Schlitten (26, 27) in der Konsole (25) in einer gemeinsamen Ebene liegen.

8. Werkzeugmaschine nach einem der Ansprüche 1 bis 3,
**dadurch gekennzeichnet, dass**
die Konsole über eine einzige Gelenkstrebe mit dem festen Maschinenteil des Maschinenständers (1) gelenkig kinematisch gekoppelt ist.

9. Werkzeugmaschine nach einem der vorstehenden Ansprüche,
**dadurch gekennzeichnet, dass**
die Schlittenkonstruktion (26, 27) auf Führungsschienen (30, 31; 57, 58) motorisch verfahrbar ist, die an den Seitenwänden (2, 3) des Maschinenständers (1) und an den Seitenwänden (20, 21) eines Ständer-Vorbaus (4) auf Sockeln (55, 56) montiert sind.

10. Werkzeugmaschine nach einem der vorstehenden Ansprüche,
**dadurch gekennzeichnet, dass**
die Führungsschienen (30, 31) in einer Horizontalebene in Richtung der Y-Koordinatenachse verlaufen.

11. Werkzeugmaschine nach einem der Ansprüche 1 bis 9,
**dadurch gekennzeichnet, dass**
die Führungsschienen unter einem spitzen Winkel geneigt von vom-unten nach hinten-oben verlaufen.

12. Werkzeugmaschine nach einem der vorstehenden Ansprüche,
**dadurch gekennzeichnet, dass**
auf der Konsole (25) eine Aufnahmeeinrichtung (62) für die Drehbearbeitung eines Werkstücks vorgesehen ist.

13. Werkzeugmaschine nach Anspruch 12,
**dadurch gekennzeichnet, dass**
die Aufnahmeeinrichtung (62) nach Art eines drehangetriebenen Spannfutters ausgebildet ist, in das ein Werkstück oder ein Werkzeug einspannbar ist.

14. Werkzeugmaschine nach einem der vorstehenden Ansprüche,
**dadurch gekennzeichnet, dass**
als Antriebsaggregat für die Linearbewegung der Schlittenkonstruktion (26, 27; 59, 60) mindestens ein elektrischer Linearmotor (23, 35; 24, 36) vorgesehen ist.

15. Werkzeugmaschine nach Anspruch 14,
**dadurch gekennzeichnet, dass**
zwei synchronisierte elektrische Linearmotoren (23, 35; 24, 36) unter gleichen Neigungswinkeln gegensinnig geneigt auf abgeschrägten Sockeln an den Innenseiten der Seitenwände (2, 3) des Maschinenständers (1) angeordnet sind.

## Claims

1. Machine tool having a device for supporting workpieces and tools, comprising
- a console (25) which is pivotable about a first axis (X) and is mounted on carriages (26, 27) guided in the machine stand (1),
- a carrier (51, 62) for a workpiece or a tool, which carrier is disposed on the console (25), and
- a drive device (37, 38) for displacing the carriages on a second axis (Y), **characterised in that**
- the console (25), in addition to its mounting in the carriages (26, 27), is articulated via crank-like arms (43, 44) to a positionally fixed machine part (2), so that the carrier (51; 62) which is disposed on the console (25) is pivotable to different operating positions by virtue of a linear movement of the carriages (26, 27) and by reason of the kinematic coupling of the console (25) on the machine part (2, 3).

2. Machine tool as claimed in claim 1,
**characterised in that**
the console (25) which is formed as a pivoting bridge is mounted with its front end part via two lateral rotary bearings (33, 34; 37, 38) in two lateral carriages (26, 27).

3. Machine tool as claimed in claim 2,
**characterised in that**
the two carriages (26, 27) are firmly connected to each other by means of transverse carriers and form parts of a dimensionally stable carriage construction.

4. Machine tool as claimed in any one of claims 1 to 3,
**characterised in that**
the free ends of the crank-like arms (43, 44) are mounted in rotary bearings (45-48) in the sidewalls (2, 3) of the machine stand (1).

5. Machine tool as claimed in claim 4,
**characterised in that**
the crank-like arms (43, 44) have a curved shape and comprise at one end thereof an inwardly facing bearing bushing (41, 42) and comprise at the other end thereof an outwardly facing bearing bushing (45, 46).

6. Machine tool as claimed in any one of claims 4 or 5,
**characterised in that**
the bearings (39-42) of the crank-like arms (43, 44) in the console (25) are at a predetermined spaced interval with respect to the rotary bearings (33, 34; 37, 38) of the console (25) in the carriages (26, 27).

7. Machine tool as claimed in claim 6,
**characterised in that**
the bearings (39-42) of the crank-like arms (43, 44) in the console (25) and the rotary bearings (33, 34; 37, 38) of the console (25) lie against the carriages (26, 27) in the console (25) in a common plane.

8. Machine tool as claimed in any one of claims 1 to 3,
**characterised in that**
the console is coupled in an articulated manner kinematically to the fixed machine part of the machine stand (1) via a single articulated strut.

9. Machine tool as claimed in any one of the preceding claims,
**characterised in that**
the carriage construction (26, 27) is movable by motor on guide rails (30, 31; 57, 58) which are mounted on the sidewalls (2, 3) of the machine stand (1) and on the sidewalls (20, 21) of a front part (4) of the stand on bases (55, 56).

10. Machine tool as claimed in any one of the preceding claims,
**characterised in that**
the guide rails (30, 31) extend in a horizontal plane in the direction of the Y-coordinate axis.

11. Machine tool as claimed in any one of claims 1 to 9,
**characterised in that**
the guide rails extend inclined at an acute angle from the front bottom to the rear top.

12. Machine tool as claimed in any one of the preceding claims,
**characterised in that**
a receiving device (62) for the lathe-machining of a workpiece is provided on the console (25).

13. Machine tool as claimed in claim 12,
**characterised in that**
the receiving device (62) is formed in the manner of a rotationally driven chuck, into which a workpiece or a tool can be clamped.

14. Machine tool as claimed in any one of the preceding claims,
**characterised in that**
at least one electric linear motor (23, 35; 24, 36) is provided as a drive unit for the linear movement of the carriage construction (26, 27; 59, 60).

15. Machine tool as claimed in claim 14,
**characterised in that**
two synchronised electric linear motors (23, 35; 24, 36) are disposed oppositely inclined at the same angles of inclination on bevelled bases on the inner sides of the sidewalls (2, 3) of the machine stand (1).

## Revendications

1. Machine-outil avec un dispositif porteur pour pièces et outils, comprenant :
- une console (25) basculant autour d'un premier axe (X), qui est supportée sur des patins (26, 27) guidés dans le bâti de machine (1),
- un support (51, 62) disposé sur la console (25) pour une pièce ou un outil et
- un dispositif d'entraînement (37, 38) pour décaler les patins vers un deuxième axe (Y),
**caractérisée en ce que**
- la console (25) est, en plus de son palier, articulée à une partie de la machine fixe (2) dans les patins (26, 27) par le biais de bras de type manivelle (43, 44) de sorte que le support (51 ; 62) disposé sur la console (25) soit orientable en diverses positions de fonctionnement par le biais d'un mouvement linéaire des patins (26, 27) et sur la base d'un accouplement cinématique de la console (25) sur la partie de la machine (2, 3).

2. Machine-outil selon la revendication 1, **caractérisée en ce que** la console (25) prenant la forme d'un pont tournant avec sa partie finale avant est située sur deux paliers rotatifs latéraux (33, 34 ; 37, 38) dans deux patins latéraux (26, 27).

3. Machine-outil selon la revendication 2, **caractérisée en ce que** les deux patins (26, 27) sont reliés de manière solidaire l'un à l'autre par le biais de supports transversaux et forment des parties d'une construction de patins ayant une stabilité dimensionnelle.

4. Machine-outil selon l'une des revendications 1 à 3, **caractérisée en ce que** les extrémités libres des bras de type manivelle (43, 44) sont situées sur des paliers rotatifs (45-48) dans les parois latérales (2, 3) du bâti de machine (1).

5. Machine-outil selon la revendication 4, **caractérisée en ce que** les bras de type manivelle (43, 44) ont une forme arquée et présentent, à l'une de leur extrémité, un coussinet (41, 42) pointant vers l'intérieur et, à une autre de leur extrémité, un coussinet (45, 46) pointant vers l'extérieur.

6. Machine-outil selon l'une des revendications 4 ou 5, **caractérisée en ce que** les paliers (39-42) des bras de type manivelle (43, 44) dans la console (25) se situent à une distance prédéterminée par rapport aux paliers rotatifs (33, 34 ; 37, 38) de la console (25) dans les patins (26, 27).

7. Machine-outil selon la revendication 6, **caractérisée en ce que** les paliers (39-42) des bras de type manivelle (43, 44) dans la console (25) et les paliers rotatifs (33, 34 ; 37, 38) de la console (25) sont disposés contre les patins (26, 27) dans la console (25) dans un plan commun.

8. Machine-outil selon l'une des revendications 1 à 3, **caractérisée en ce que** la console est couplée cinématiquement de manière articulée par le biais d'une unique bielle d'accouplement avec la partie de la machine fixe du bâti de machine (1).

9. Machine-outil selon l'une des revendications précédentes, **caractérisée en ce que** la construction de patins (26, 27) est déplaçable de manière motorisée sur des rails de guidage (30, 31 ; 57, 58), qui sont montés sur des socles (55, 56) sur les parois latérales (2, 3) du bâti de machine (1) et sur les parois latérales (20, 21) d'une avancée du bâti (4).

10. Machine-outil selon l'une des revendications précédentes, **caractérisée en ce que** les rails de guidage (30, 31) se déplacent dans un plan horizontal dans la direction de l'axe des coordonnées Y.

11. Machine-outil selon l'une des revendications 1 à 9, **caractérisée en ce que** les rails de guidage se déplacent sous un angle aigu incliné du bas avant vers le haut arrière.

12. Machine-outil selon l'une des revendications précédentes, **caractérisée en ce qu'**un dispositif de réception (62) est prévu sur la console (25) pour l'usinage rotatif d'une pièce.

13. Machine-outil selon la revendication 12, **caractérisée en ce que** le dispositif de réception (62) est conçu à la façon d'un mandrin entraîné en rotation, dans lequel une pièce ou un outil peut être serré(e).

14. Machine-outil selon l'une des revendications précédentes, **caractérisée en ce qu'**un moteur linéaire électrique (23, 35 ; 24, 36) est prévu comme groupe d'entraînement pour le mouvement linéaire de la construction de patins (26, 27 ; 59, 60).

15. Machine-outil selon la revendication 14, **caractérisée en ce que** deux moteurs linéaires électriques synchronisés (23, 35 ; 24, 36) sont disposés sous les mêmes angles d'inclinaison, inclinés à l'envers, sur des socles obliques sur les faces intérieures des parois latérales (2, 3) du bâti de machine (1).
